# EUROPÄISCHE PATENTSCHRIFT

(11) **EP 3 155 281 B1**
(45) Veröffentlichungstag und Bekanntmachung des Hinweises auf die Patenterteilung: **06.06.2018**
(21) Anmeldenummer: 15738255.7
(22) Anmeldetag: 09.06.2015
(51) Int. Cl.: F16D 48/06

(54) **VERFAHREN UND VORRICHTUNG ZUR ERMITTLUNG EINES TASTPUNKTES EINER HYBRIDTRENNKUPPLUNG EINES HYBRIDFAHRZEUGES**
METHOD AND DEVICE FOR DETERMINING AN ENGAGEMENT POINT OF A HYBRID CLUTCH IN A HYBRID VEHICLE
PROCÉDÉ ET DISPOSITIF DE DÉTERMINATION D'UN POINT DE CONTACT D'UN EMBRAYAGE DE SÉPARATION HYBRIDE D'UN VÉHICULE HYBRIDE

(30) Priorität: 13.06.2014 DE 102014211381
(43) Veröffentlichungstag der Anmeldung: 19.04.2017
(73) Patentinhaber: Schaeffler Technologies AG & Co. KG, 91074 Herzogenaurach (DE)
(72) Erfinder: HODRUS, Erhard, 76131 Karlsruhe (DE)
(86) Internationale Anmeldenummer: PCT/DE2015/200350
(87) Internationale Veröffentlichungsnummer: WO 2015/188825

(56) Entgegenhaltungen:
- EP-A2- 0 635 391
- WO-A1-98/46445
- DE-A1- 10 031 438
- US-A- 6 022 295
- US-A1- 2010 004 837

## Beschreibung

Die Erfindung betrifft ein Verfahren zur Ermittlung eines Tastpunktes einer Hybridtrennkupplung eines Hybridfahrzeuges, welche von einem hydrostatischen Kupplungsaktor betätigt wird, wobei die Hybridtrennkupplung einen Verbrennungsmotor und einen Elektrotraktionsantrieb trennt oder verbindet und der Tastpunkt bei stillstehendem Verbrennungsmotor durch langsames Betätigen der Hybridtrennkupplung, ausgehend von einer Position der Hybridtrennkupplung, welche diese in einem unbetätigten Zustand einnimmt, unter Beobachtung eines Momentes des Elektrotraktionsantriebes bestimmt wird, wenn eine definierte Momentenerhöhung detektiert wird, sowie eine Vorrichtung zur Durchführung des Verfahrens.

Die DE 10 2010 024 941 A1 offenbart ein Verfahren zur Steuerung eines Doppelkupplungsgetriebes mit mindestens zwei Teilantriebssträngen, von denen jeder mittels einer Kupplung mit einer Brennkraftmaschine koppelbar ist. Im Fahrbetrieb des, das Doppelkupplungsgetriebe umfassenden Fahrzeuges wird ein Tastpunkt der Kupplung unabhängig vom Motormoment ermittelt. Dieser Tastpunkt wird dabei während der Inbetriebnahme des Fahrzeuges bestimmt und dann während des Betriebes des Fahrzeuges adaptiert.

Bei einem Hybridfahrzeug mit hybridischem Antriebsstrang kann der Fahrwiderstand aus zwei unabhängigen Energiequellen, wie Kraftstoff eines Verbrennungsmotors und elektrische Energie aus einer Traktionsbatterie eines Elektromotors, durch Umwandlung in mechanische Energie überwunden werden. Gemäß der DE 10 2008 030 473 A1 ist ein Verfahren zur Tastpunktermittlung einer automatisierten Hybridtrennkupplung in einem Hybridantriebsstrang bekannt. Der Tastpunkt der Hybridtrennkupplung, welche zwischen einem Verbrennungsmotor und einem Elektrotraktionsantrieb angeordnet ist, wird bei stillgesetztem Verbrennungsmotor bestimmt, indem die Hybridtrennkupplung langsam geschlossen wird und der Einfluss der sich schließenden Hybridtrennkupplung auf eine Elektromaschine des Elektrotraktionsantriebes, die mit einer vorgegebenen Drehzahl rotiert, ausgewertet wird. Diese Hybridtrennkupplung ermöglicht im geöffneten Zustand ein rein elektrisches Fahren des Hybridfahrzeuges, während im geschlossenen Zustand das Drehmoment des Verbrennungsmotors zum Antriebsrad geführt wird.

Eine weitere Aufgabe der Hybridtrennkupplung besteht in dem Start des Verbrennungsmotors. Hierzu wird durch gezielte Erhöhung des Drehmomentes des Elektromotors und Schließen der Hybridtrennkupplung Energie zum stehenden Verbrennungsmotor übertragen und dieser somit beschleunigt. Hinsichtlich des Fahrkomforts muss dabei das von der Hybridtrennkupplung übertragene Drehmoment exakt bekannt sein, um ungewollte Fahrzeugbeschleunigungen zu vermeiden, da das Drehmoment des Elektromotors gleichzeitig auch auf die Antriebsräder übertragen wird.

Das von der Hybridtrennkupplung übertragene Drehmoment ist direkt von der Position eines, die Hybridtrennkupplung betätigenden elektrostatischen Kupplungsaktors abhängig. Zur Abschätzung des übertragenen Kupplungsmomentes muss einerseits die Lage des Kupplungsaktors relativ zum möglichen Verfahrweg bekannt sein, andererseits muss eine Kupplungskennlinie (Kupplungsmoment in Abhängigkeit der Aktorposition) auf den Aktorweg referenziert werden. Der Tastpunkt stellt dabei eine Stützstelle der Kupplungskennlinie dar. Der Tastpunkt muss für den Betrieb einmalig ermittelt werden und während des Betriebes an das veränderte Kupplungsverhalten, welches aufgrund von verschiedenen Einschlussfaktoren wie Verschleiß, Nachstellung der Kupplung und Temperatur sowie Alterungsprozesse nicht konstant ist, angepasst werden. Es ist bekannt, den Tastpunkt bei der Inbetriebnahme des Hybridfahrzeuges durch einen Diagnoseservice zu ermitteln. Ein wesentlicher Nachteil dieser Ermittlung des Tastpunktes ist, dass die Tastpunktadaption, die während der Inbetriebnahme durchgeführt wird, für eine Adaption des Tastpunktes im Fahrbetrieb des Hybridfahrzeuges zu lange dauert.

Aus der US 2010/004837 A1 ist ein Verfahren zur Ermittlung eines Tastpunktes einer Hybridtrennkupplung eines Hybridfahrzeuges bekannt, welche von einem hydrostatischen Kupplungsaktor betätigt wird, wobei die Hybridtrennkupplung einen Verbrennungsmotor und einen Elektrotraktionsantrieb trennt oder verbindet und der Tastpunkt durch langsames Betätigen der Kupplung, ausgehend von einer Position der Hybridtrennkupplung, welche diese in einem unbetätigten Zustand einnimmt, unter Beobachtung eine Drehzahl des Elektrotraktionsantriebes bestimmt wird, wobei ein aktueller Tastpunkt während eines Betriebes des Hybridfahrzeuges adaptiert wird, wobei zur Adaption des aktuellen Tastpunktes während des Betriebes eine Inbetriebnahmeroutine genutzt wird, mit welcher ein erster Tastpunkt bei einer Inbetriebnahme des Hybridfahrzeuges ermittelt wird, und zur Ermittlung eines adaptierten Tastpunkts die Hybridtrennkupplung verschoben wird, bis die offene Position der Hybridtrennkupplung detektiert wird.

Bezüglich weiteren Standes der Technik wird auf die US 6 022 295 A, die EP 0 635 391 A2, die DE 100 31 438 A1 und die WO 98/46445 A1 verwiesen.

Der Erfindung liegt somit die Aufgabe zugrunde, ein Verfahren zur Ermittlung eines Tastpunktes anzugeben, welches für die Adaption des Tastpunktes während der Fahrt des Hybridfahrzeuges genutzt werden kann.

Erfindungsgemäß wird die Aufgabe dadurch gelöst, dass ein aktueller Tastpunkt während eines Betriebes des Hybridfahrzeuges adaptiert wird, wobei zur Adaption des aktuellen Tastpunktes während des Betriebes eine Inbetriebnahmeroutine genutzt wird, mit welcher ein erster Tastpunkt bei einer Inbetriebnahme des Hybridfahrzeuges ermittelt wird, wobei die Hybridtrennkupplung nahe an einem vorhergehend bestimmten Tastpunkt herangefahren wird und die Hybridtrennkupplung, ausgehend von diesem zuletzt bestimmten Tastpunkt, weiter verschoben wird, bis die definierte Momentenerhöhung detektiert wird. Dies hat den Vorteil, dass bei der Adaption des Tastpunktes während des Fahrbetriebes des Hybridfahrzeuges der Adaptionsvorgang wesentlich verkürzt werden kann, da ein vorhergehend bestimmter Tastpunkt der Tastpunktadaption zugrunde gelegt wird, wodurch sich die verwendete Inbetriebnahmeroutine wesentlich verkürzt. Der aktuelle Tastpunkt kann somit wesentlich schneller bestimmt werden.

Vorteilhafterweise wird während der Inbetriebnahme des Hybridfahrzeuges mit der Inbetriebnahmeroutine der erste Tastpunkt der Hybridtrennkupplung ermittelt, welcher bei einer ersten Adaption zur Bestimmung des aktuellen Tastpunktes als vorhergehend bestimmter Tastpunkt zugrunde gelegt wird. Durch diesen während der Inbetriebnahme des Hybridfahrzeuges ermittelten ersten Tastpunkt ist der Bereich, in welchem eine Tastpunktverschiebung vermutet wird, bereits bekannt, so dass die Hybridtrennkupplung in der Adaptionsphase in diesem Bereich verfahren werden kann und somit die Zeitdauer zur Bestimmung des aktuellen Tastpunktes verkürzt wird.

In einer Ausgestaltung wird als vorhergehend bestimmter Tastpunkt, der zuletzt bestimmte Tastpunkt zugrunde gelegt, welcher in der, der aktuellen Adaptionsphase unmittelbar vorhergehenden Adaptionsphase bestimmt wird. Auch bei dieser Vorgehensweise wird durch die Verwendung des beim unmittelbar vorhergehenden Adaptionszyklus ermittelten Tastpunkts ein sehr schnelles Heranfahren an einen möglichen aktuellen Tastpunkt ermöglicht, wodurch die Zeit zur Ermittlung des aktuellen Tastpunktes verkürzt wird.

In einer Variante wird auf eine bevorstehend definierte Momentenerhöhung geschlossen, wenn ein vorgegebener Schwellwert der Momentenerhöhung überschritten wird, wobei der vorgegebene Schwellwert wiederholt solange auf ein maximal ansteigendes Tastpunktmoment angehoben wird, bis die von dem Elektrotraktionsantrieb ausgegebene Momentenerhöhung minimal der Höhe des Tastpunktmomentes entspricht. Durch das mehrfache Anfahren des Schwellwertes, welches vorzugsweise mit unterschiedlichen ansteigenden Momentenniveaus erfolgen kann, lässt sich eine besonders genaue Bestimmung des Tastpunktmomentes realisieren, weshalb der adaptierte aktuelle Tastpunkt genau ermittelt werden kann.

In einer Ausführungsform wird der Tastpunkt der Hybridtrennkupplung aus dem Tastpunktmoment, welches der, von dem Elektrotraktionsantrieb ausgegebenen Momentenerhöhung entspricht, durch einen regeltechnischen Beobachter adaptiert. Dies ist notwendig, um nicht in der Kupplungsmomentenhysterese einen undefinierten Zustand zu erreichen.

In einer Alternative wird der Tastpunkt der Hybridtrennkupplung aus dem Tastpunktmoment, welches der von dem Elektrotraktionsantrieb ausgegebenen Momentenerhöhung entspricht, aus einer Kennlinie der Hybridtrennkupplung adaptiert. Die Verwendung eines softwaremäßig und somit rechnerzeitaufwändigen regeltechnischen Beobachters kann somit entfallen.

In einer Ausgestaltung wird nach erfolgter Adaption des Tastpunktes die Hybridtrennkupplung in die Position zurückgeführt, welche diese in unbestätigtem Zustand einnimmt, wobei geprüft wird, ob das von dem Elektrotraktionsantrieb abgegebene Moment mit dem Moment des Elektrotraktionsantriebes übereinstimmt, welches dieser bei dieser Position der Hybridtrennkupplung zu Beginn der aktuellen Adaptionsphase abgegeben hat. Damit wird untersucht, ob vor und nach der Adaptionsphase das Moment des Elektrotraktionsantriebes dasselbe Niveau aufweist, wodurch störende Einflüsse bei der Ermittlung des Tastpunktes ausgeschlossen werden können und somit der so ermittelte aktuelle Tastpunkt der Steuerung der Hybridtrennkupplung zugrunde gelegt werden kann.

In einer Ausführungsform wird bei der Inbetriebnahme des Hybridfahrzeuges als vorhergehend bestimmter Tastpunkt ein berechneter Tastpunkt verwendet. Die Nutzung eines solchen berechneten Tastpunktes ermöglicht auch bei der erstmaligen Bestimmung des Tastpunktes, dass die Inbetriebnahmeroutine zur Bestimmung des Tastpunktes nicht zu lang ist, um sich dem tatsächlichen ersten Tastpunkt anzunähern.

Eine Weiterbildung der Erfindung betrifft eine Vorrichtung zur Steuerung einer Hybridtrennkupplung eines Hybridfahrzeuges, welche von einem hydrostatischen Kupplungsaktor betätigbar ist, wobei die Hybridtrennkupplung zwischen einem Verbrennungsmotor und einem Elektrotraktionsantrieb angeordnet ist. Bei einer solchen Vorrichtung wird die Hybridtrennkupplung nach einem in dieser Schutzrechtsanmeldung ausgeführten Merkmal angesteuert.

Die Erfindung lässt zahlreiche Ausführungsformen zu. Eine davon soll anhand der in der Zeichnung dargestellten Figuren näher erläutert werden.

Es zeigen:
- Fig. 1: eine Prinzipdarstellung eines Hybridantriebes,
- Fig. 2: eine Prinzipdarstellung für eine Tastpunktbestimmung bei einer ersten Inbetriebnahme eines Hybridfahrzeuges nach dem erfindungsgemäßen Verfahren,
- Fig. 3: eine Prinzipdarstellung einer Tastpunktbestimmung während des Betriebes des Hybridfahrzeuges nach dem erfindungsgemäßen Verfahren.

Gleiche Merkmale sind mit gleichen Bezugszeichen gekennzeichnet.

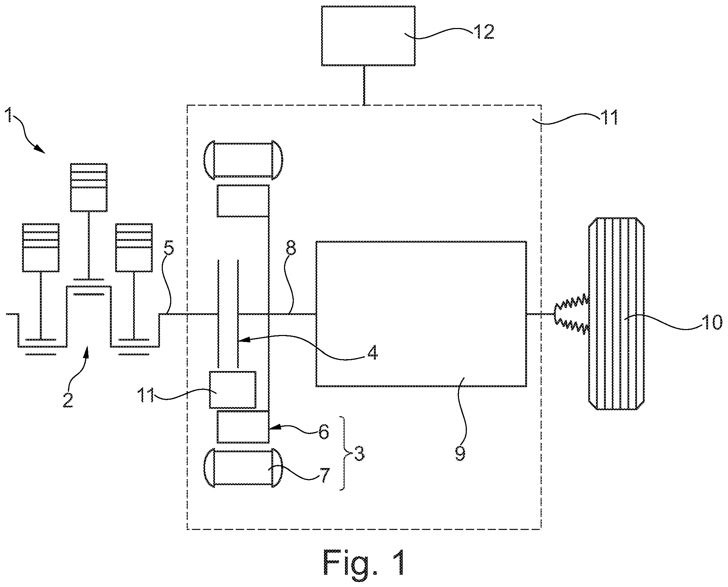

In Fig. 1 ist eine Prinzipdarstellung eines Antriebsstranges eines Hybridfahrzeuges dargestellt. Dieser Antriebsstrang 1 umfasst einen Verbrennungsmotor 2 und einen Elektromotor 3. Zwischen dem Verbrennungsmotor 2 und dem Elektromotor 3 ist direkt hinter dem Verbrennungsmotor 2 eine Hybridtrennkupplung 4 angeordnet. Verbrennungsmotor 2 und Hybridtrennkupplung 4 sind über eine Kurbelwelle 5 miteinander verbunden. Der Elektromotor 3 weist einen drehbaren Rotor 6 und einen feststehenden Stator 7 auf. Die Abtriebswelle 8 der Hybridtrennkupplung 4 ist mit einem Getriebe 9 verbunden, welches ein nicht weiter dargestelltes Koppelelement, beispielsweise eine zweite Kupplung oder einen Drehmomentwandler enthält, die zwischen dem Elektromotor 3 und dem Getriebe 9 angeordnet ist. Das Getriebe 9 überträgt das von dem Verbrennungsmotor 2 und/oder dem Elektromotor 3 erzeugte Drehmoment auf die Antriebsräder 10 des Hybridfahrzeuges. Die Hybridtrennkupplung 4 und das Getriebe 9 bilden dabei ein Getriebesystem 11, welches von einem hydrostatischen Aktor 12 angesteuert wird.

Im Weiteren wird davon ausgegangen, dass es sich bei der Hybridtrennkupplung 4 um eine unbetätigt geschlossene Kupplung (normally closed) handelt. Das Verfahren ist aber auch ohne große Änderungen bei einer "normally open" Kupplung anwendbar. Die zwischen dem Verbrennungsmotor 2 und dem Elektromotor 3 angeordnete Hybridtrennkupplung 4 wird geschlossen, um während der Fahrt des Hybridfahrzeuges mit dem von dem Elektromotor 3 erzeugten Drehmoment den Verbrennungsmotor 2 zu starten oder während eines Boostbetriebes mit antreibendem Verbrennungsmotor 2 und Elektromotor 3 zu fahren. Die Hybridtrennkupplung 4 wird dabei von dem elektrostatischen Kupplungsaktor 12 betätigt. Um sicherzustellen, dass bei dem Wiederstart des Verbrennungsmotors 2 durch den Elektromotor 3 ein ausreichendes Drehmoment vom Elektromoment 3 bereitgestellt wird, welches sowohl das Hybridfahrzeug über die Antriebsräder 10 ohne Komfortverlust bewegt und gleichzeitig den Verbrennungsmotor 2 auch tatsächlich startet, ist eine genaue Kenntnis einer Kupplungskennlinie der Hybridtrennkupplung 4 erforderlich, bei welcher ein Kupplungsmoment über dem Aktorweg abgebildet ist. Eine Schnittstelle dieser Kupplungskennlinie ist der Tastpunkt, unter dem die Position der Hybridtrennkupplung zu verstehen ist, bei dem die Reibflächen des Ein- bzw. Ausgangsteils der Hybridtrennkupplung in Reibkontakt zueinander treten.

Dieser Tastpunkt ist von besonderer Bedeutung für die Steuerung der Hybridtrennkupplung und wird somit während der Erstinbetriebnahme des Hybridfahrzeuges bestimmt und während des Fahrbetriebes des Hybridfahrzeuges adaptiert. Die Bestimmung des Tastpunktes erfolgt bei stillgelegtem Verbrennungsmotor. Zur Ermittlung des Tastpunktes wird ein an die Hybridtrennkupplung 4 angelegtes Kupplungssollmoment zunehmend vergrößert, bis an dem Elektromotor 3 ein dem Kupplungssollmoment zuordenbare Antriebsmoment erfassbar ist. Voraussetzung ist dabei, dass die Hybridtrennkupplung 4 in einem geöffneten Zustand sich befindet und anschließend langsam unter Beobachtung des Momentes des Elektromotors 3 zugefahren wird, wobei der den Elektromotor 3 umfassende Elektrotraktionsantriebs sich in einem drehzahlgeregelten Betrieb, also bei einer stabilen Drehzahl befindet. Die Hybridtrennkupplung 4 wird also zugefahren, bis die Reibeingriffsflächen von Ein- und Ausgangsteil der Hybridtrennkupplung 4 in Reibkontakt stehen und ein minimales Moment auf den Elektromotor 4 übertragen wird, das durch eine entsprechende Reaktion des Elektromotors 3 erfasst wird. Diese entsprechende Reaktion besteht darin, dass eine definierte Momentenerhöhung durch den Elektromotor 3 gegeben ist.

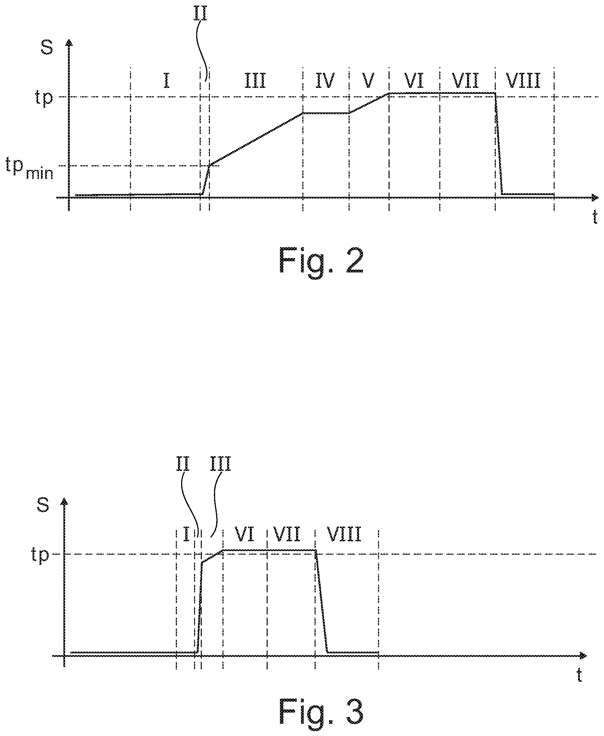

Bei der erstmaligen Inbetriebnahme des Hybridfahrzeuges wird eine Inbetriebnahme zur Feststellung des ersten Tastpunktes initiiert, welche anhand von Fig. 2 näher erläutert werden soll. Die Inbetriebnahmeroutine besteht dabei aus acht Phasen, wobei in Fig. 2 der Aktorweg s über einer Zeit t dargestellt ist. Die gestrichelte Linie stellt dabei den zu erwartenden Tastpunkt tp dar. In der Phase I ist die Hybridtrennkupplung 4 geöffnet, und es wird ein Momenten-Offset des Elektromotors 3 des Elektrotraktionsantriebes bestimmt. Durch das Schließen der Hybridtrennkupplung 4 wird das Moment des Elektromotors 3 um das so bestimmte Offset erhöht.

In der Phase II wird die Hybridtrennkupplung 4 auf eine minimale Tastpunktposition tpₘᵢₙ geschlossen, wobei diese minimale Tastpunktposition tpₘᵢₙ rechnerisch festgelegt wurde. Bei Einstellung dieser minimalen Tastpunktposition, welche eine vorgegebene Zeit in Anspruch nimmt, wird das Moment des Elektrotraktionsantriebes 3 weiter beobachtet. In der anschließenden Phase III wird die Hybridtrennkupplung 4 langsam geschlossen, wobei die Hybridtrennkupplung 4 eine konstante Geschwindigkeit aufweist. Während des Schließens der Hybridtrennkupplung 4 wird weiter das Moment des Elektromotors 3 des Elektrotraktionsantriebes beobachtet. Anschließend wird eine Phase IV erreicht, in welcher das Moment des Elektromotors 3 des Elektrotraktionsantriebes einen vorgegebenen Schwellwert überschreitet. Dieser vordefinierte Schwellwert wird stufenförmig durch zyklisches Durchlaufen der Phase III und IV auf maximal ein Tastpunktmoment angehoben, bis der Elektromotor 3 des Elektrotraktionsantriebes eine Momentenerhöhung von minimal der Höhe des Tastpunktmomentes anzeigt. Bei dem zyklischen Durchlaufen der Phasen III und IV werden unterschiedliche Momentenniveaus von beispielsweise 1 Newton, 3 Newton oder 5 Newton als vordefinierter Schwellwert eingesetzt. Somit wird die Hybridtrennkupplung 4 allmählich an das Tastpunktmoment herangeführt. Dieses stufenweise Heranführen wird in den Phasen V und VI wiederholt, wobei die Phase V der Phase III und die Phase VI der Phase IV entspricht.

In der sich daran anschließenden Phase VII wird der Tastpunkt tp über einen regelungstechnischen Beobachter adaptiert, um sicherzustellen, dass die Hybridtrennkupplung 4 geschlossen ist, um nicht in der Kupplungsmomentenhysterese einen undefinierten Zustand zu erreichen. Durch das nur Schließen der Hybridtrennkupplung 4 wird gewährleistet, dass die Hybridtrennkupplung sich nur auf einem Hystereseast bewegt.

Abschließend wird in einer Phase VIII die Hybridtrennkupplung 4 wieder geöffnet und geprüft, ob das Momentenniveau des Elektromotors 3 des Elektrotraktionsantriebes zum Abschluss des Inbetriebnahmevorgangs wieder dem Momentenniveau entspricht, welches der Elektromotors des Elektrotraktionsantriebes bei Beginn der Inbetriebnahmeroutine ausgegeben hat.

An diese Inbetriebnahmeroutine, in welcher der Tastpunkt tp erstmalig ermittelt wird, schließen sich während der Fahrt des Hybridfahrzeuges Adaptionsphasen an, in welchen der so bestimmte Tastpunkt tp adaptiert wird, um somit einer Veränderung des Tastpunktes tp durch Verschleiß, Temperatur und ähnlichem Rechnung zu tragen und eine genauere Ansteuerung des Kupplungsaktors 12 zu ermöglichen.

Bei der Tastpunktadaption während der Fahrt des Hybridfahrzeuges wird die Inbetriebnahmeroutine benutzt, welche im Zusammenhang mit Fig. 2 bei der erstmaligen Inbetriebnahme des Hybridfahrzeuges verwendet wurde. Da durch die Erstinbetriebnahme bereits ein erster Tastpunkt tp bekannt ist, wird dieser, wie in Fig. 3 dargestellt, in der Phase II verwendet, um die Hybridtrennkupplung 4 bis kurz vor eine schon bekannte Tastpunktposition zu bewegen. Durch das schnelle Anfahren der Hybridtrennkupplung 4 an die bekannte Tastpunktposition verkürzen sich somit die Phasen I und II. Es schließt sich auch hier die Phase III an, in welcher die Hybridtrennkupplung 4 langsam geschlossen wird und das von dem Elektromotor 3 des Elektrotraktionsantriebes ausgegebene Moment weiter beobachtet wird. Da man aufgrund des Bekanntseins eines vorhergehenden Tastpunktes an den aktuellen Tastpunkt tp schon relativ nahe heranfahren kann, verkürzt sich die Phase III ebenfalls. Eine zyklische Wiederholung zur Erkennung des Tastpunktes entfällt, weshalb von Phase III sofort auf die Phase VI und Phase VII übergegangen wird. In der Phase VII wird auch hier der Tastpunkt tp über einen regelungstechnischen Beobachter adaptiert, während in der Phase VIII die Hybridtrennkupplung 4 geöffnet wird und das Momentenniveau des Elektromotors 3 des Elektrotraktionsantriebes bei geöffneter Hybridtrennkupplung 4 zum Schluss der Adaptionsphase mit dem Momentenniveau des Elektromotors 3 des Elektrotraktionsantriebes bei geöffneter Hybridtrennkupplung 4 in der Phase I verglichen wird. Wie aus Fig. 3 ersichtlich, verkürzt sich die Adaption des aktuellen Tastpunktes tp während der Fahrt des Hybridfahrzeuges gegenüber der Erstinbetriebnahme wesentlich.

Statt den Tastpunkt komplett durch den Beobachter neu zu berechnen, ist es vorteilhaft, den alten Tastpunkt in Richtung des aktuellen Tastpunktes zu verändern. Dies hat eine glättende Wirkung, wodurch falsch bestimmte Tastpunkte nur einen reduzierten Einfluss haben. Die Phase VII kann vollständig entfallen, wenn anstelle des regelungstechnischen Beobachters der Tastpunkt über die Kupplungskennlinie berechnet wird. Bei der Verwendung des Elektromotors 3 des Elektrotraktionsantriebes ist die Adaption des Tastpunktes bei positiven als auch bei negativen Drehzahlen möglich. Alternativ kann man die verkürzte Tastpunktroutine auch beim Tasten gegen den Verbrennungsmotor einsetzen.

Bei der vorgeschlagenen Bestimmung des Tastpunktes wird der Tastpunkt während des Fahrbetriebes des Hybridfahrzeuges genauso ermittelt wie bei der Inbetriebnahme. Da der Tastpunkt durch die Erstinbetriebnahme genau vorbestimmt ist, kann man die Hybridtrennkupplung 4 schon bis kurz vor dem zu erwartenden aktuellen Tastpunkt schließen und dann weiter schließen, bis die definierte Motormomentänderung detektiert wird.

### Bezugszeichenliste

- 1: Antriebsstrang
- 2: Verbrennungsmotor
- 3: Elektromotor
- 4: Hybridtrennkupplung
- 5: Kurbelwelle
- 6: Rotor
- 7: Stator
- 8: Abtriebswelle
- 9: Getriebe
- 10: Antriebsräder
- 11: Getriebesystem
- 12: Hydrostatischer Aktor

## Patentansprüche

1. Verfahren zur Ermittlung eines Tastpunktes einer Hybridtrennkupplung eines Hybridfahrzeuges, welche von einem hydrostatischen Kupplungsaktor (12) betätigt wird, wobei die Hybridtrennkupplung (4) einen Verbrennungsmotor (2) und einen Elektrotraktionsantrieb (3) trennt oder verbindet und der Tastpunkt durch langsames Betätigen der Kupplung, ausgehend von einer Position der Hybridtrennkupplung (4), welche diese in einem unbetätigten Zustand einnimmt, unter Beobachtung eines Momentes des Elektrotraktionsantriebes (3) bestimmt wird, wenn eine definierte Momentenerhöhung detektiert wird, **dadurch gekennzeichnet, dass** ein aktueller Tastpunkt (tp) während eines Betriebes des Hybridfahrzeuges adaptiert wird, wobei zur Adaption des aktuellen Tastpunktes (tp) während des Betriebes eine Inbetriebnahmeroutine genutzt wird, mit welcher ein erster Tastpunkt bei einer Inbetriebnahme des Hybridfahrzeuges ermittelt wird, wobei die Hybridtrennkupplung (4) nahe an einen vorhergehend bestimmten Tastpunkt herangefahren wird und die Hybridtrennkupplung (4), ausgehend von diesem vorhergehend bestimmten Tastpunkt, weiter verschoben wird, bis die definierte Momentenerhöhung detektiert wird.

2. Verfahren nach Anspruch 1, **dadurch gekennzeichnet, dass** während der Inbetriebnahme des Hybridfahrzeuges mit der Inbetriebnahmeroutine der erste Tastpunkt der Hybridtrennkupplung (4) ermittelt wird, welcher bei einer ersten Adaption zur Bestimmung des aktuellen Tastpunktes (tp) während des Betriebes des Hybridfahrzeuges als vorhergehend bestimmter Tastpunkt zugrunde gelegt wird.

3. Verfahren nach Anspruch 1 oder 2, **dadurch gekennzeichnet, dass** als vorhergehend bestimmter Tastpunkt, der zuletzt bestimmte Tastpunkt verwendet wird, welcher in der, der aktuellen Adaptionsphase unmittelbar vorausgehenden Adaptionsphase bestimmt wurde.

4. Verfahren nach Anspruch 1, 2 oder 3, **dadurch gekennzeichnet, dass** auf eine bevorstehend definierte Momentenerhöhung geschlossen wird, wenn ein vorgegebener Schwellwert der Momentenerhöhung überschritten wird, wobei der vorgegebene Schwellwert solange wiederholt auf maximal ein ansteigendes Tastpunktmoment angehoben wird, bis die von dem Elektrotraktionsantrieb (3) ausgegebene Momentenerhöhung minimal der Höhe des Tastpunktmomentes entspricht.

5. Verfahren nach Anspruch 4, **dadurch gekennzeichnet, dass** der Tastpunkt der Hybridtrennkupplung (4) aus dem Tastpunktmoment, welches der von dem Elektrotraktionsantrieb (3) ausgegebenen Momentenerhöhung entspricht, durch einen regeltechnischen Beobachter adaptiert wird.

6. Verfahren nach Anspruch 4, **dadurch gekennzeichnet, dass** der Tastpunkt der Hybridtrennkupplung (4) aus dem Tastpunktmoment, welches der von dem Elektrotraktionsantrieb (3) ausgegebenen Momentenerhöhung entspricht, aus einer Kennlinie der Hybridtrennkupplung (4) adaptiert wird.

7. Verfahren nach mindestens einem der vorhergehenden Ansprüche, **dadurch gekennzeichnet, dass** nach erfolgter Adaption des Tastpunktes die Hybridtrennkupplung (4) in die Position zurückgeführt wird, welche diese im unbetätigten Zustand einnimmt, wobei geprüft wird, ob das von dem Elektrotraktionsantrieb (3) abgegebene Moment mit dem Moment des Elektrotraktionsantriebes (3) übereinstimmt, welches dieser bei dieser Position der Hybridtrennkupplung (4) zu Beginn der aktuellen Adaptionsphase abgegeben hat.

8. Verfahren nach mindestens einem der vorhergehenden Ansprüche, **dadurch gekennzeichnet, dass** bei der Inbetriebnahme des Hybridfahrzeuges als vorhergehend bestimmter Tastpunkt ein berechneter Tastpunkt verwendet wird.

9. Vorrichtung zur Steuerung einer Hybridtrennkupplung eines Hybridfahrzeuges, welche von einem hydrostatischen Kupplungsaktor (12) betätigbar ist, wobei die Hybridtrennkupplung (4) zwischen einem Verbrennungsmotor (2) und einem Elektrotraktionsantrieb (3) angeordnet ist, **dadurch gekennzeichnet, dass** die Hybridtrennkupplung (4) nach einem Verfahren gemäß mindestens einem der vorhergehenden Ansprüche 1 bis 8 steuerbar ist.

## Claims

1. Method for determining a bite point of a hybrid clutch of a hybrid vehicle, which hybrid clutch is actuated by a hydrostatic clutch actuator (12), wherein the hybrid clutch (4) disconnects or connects an internal combustion engine (2) and an electric traction drive (3), and the bite point is determined by slowly actuating the clutch, starting from a position of the hybrid clutch (4) which the latter assumes in a non-actuated state, while observing a torque of the electric traction drive (3) when a defined increase in torque is detected, **characterized in that** a current bite point (tp) is adapted while the hybrid vehicle is operating, wherein in order to adapt the current bite point (tp) during operation an activation routine is used with which a first bite point is determined during an activation process of the hybrid vehicle, wherein the hybrid clutch (4) is moved close to a previously determined bite point, and the hybrid clutch (4) is shifted further, starting from this previously determined bite point, until the defined increase in torque is detected.

2. Method according to Claim 1, **characterized in that** the first bite point of the hybrid clutch (4), which bite point is used as the basis for a first adaptation for determining the current bite point (tp) during the operation of the hybrid vehicle as a previously determined bite point, is determined during the activation process of the hybrid vehicle with the activation routine.

3. Method according to Claim 1 or 2, **characterized in that** the bite point determined last, which was determined in the adaptation phase directly preceding the current adaptation phase, is used as the previously determined bite point.

4. Method according to Claim 1, 2 or 3, **characterized in that** an imminently defined increase in torque is inferred if a predefined threshold value of the increase in torque is exceeded, wherein the predefined threshold value is raised repeatedly to at maximum a rising bite point torque until the increase in torque which is output by the electric traction drive (3) corresponds at minimum to the level of the bite point torque.

5. Method according to Claim 4, **characterized in that** the bite point of the hybrid clutch (4) is adapted by a technical control observer starting from the bite point torque which corresponds to the increase in torque which is output by the electric traction drive (3).

6. Method according to Claim 4, **characterized in that** the bite point of the hybrid clutch (4) is adapted on the basis of a characteristic curve of the hybrid clutch (4) starting from the bite point torque which corresponds to the increase in torque which is output by the electric traction drive (3).

7. Method according to at least one of the preceding claims, **characterized in that** after the bite point has been adapted, the hybrid clutch (4) is returned to the position which it assumes in the non-actuated state, wherein it is checked whether the torque which is output by the electric traction drive (3) corresponds to the torque of the electric traction drive (3) which the latter output in this position of the hybrid clutch (4) at the start of the current adaptation phase.

8. Method according to at least one of the preceding claims, **characterized in that** when the hybrid vehicle is actuated a calculated bite point is used as the previously determined bite point.

9. Device for controlling a hybrid clutch of a hybrid vehicle, which clutch can be actuated by a hydrostatic clutch actuator (12), wherein the hybrid clutch (4) is arranged between an internal combustion engine (2) and an electric traction drive (3), **characterized in that** the hybrid clutch (4) can be controlled in accordance with a method according to at least one of the preceding Claims 1 to 8.

## Revendications

1. Procédé de détermination du point de palpage d'un embrayage de séparation hybride pour véhicule hybride, actionné par un actionneur hydrostatique d'embrayage (12), l'embrayage de séparation hybride (4) séparant un moteur (2) à combustion interne et un entraînement électrique en traction (3) ou les reliant et le point de palpage étant défini par un actionnement lent de l'embrayage partant d'une position de l'embrayage de séparation hybride (4) que prend ce dernier à l'état non activé, en surveillant le couple de l'entraînement électrique en traction (3) lorsqu'une augmentation définie du couple est détectée,
**caractérisé en ce que** le point effectif de palpage (tp) est adapté pendant le fonctionnement du véhicule hybride, **en ce que** pour l'adaptation du point de palpage effectif (tp) pendant le fonctionnement est utilisée une routine de mise en service par laquelle un premier point de palpage est déterminé lors de la mise en service du véhicule hybride, l'embrayage de séparation hybride (4) étant avancé jusqu'à proximité d'un point de palpage défini précédemment et partant de ce point de palpage défini préalablement, l'embrayage de séparation hybride (4) est déplacé plus loin jusqu'à ce que l'augmentation définie du couple soit détectée.

2. Procédé selon la revendication 1, **caractérisé en ce que** pendant la mise en service du véhicule hybride par la routine de mise en service, le premier point de palpage de l'embrayage de séparation hybride (4) qui a été utilisé comme point de palpage défini préalablement lors d'une première adaptation de détermination du point de palpage effectif (tp) pendant le fonctionnement du véhicule hybride est déterminé.

3. Procédé selon les revendications 1 ou 2, **caractérisé en ce qu'**il utilise comme point de palpage défini précédemment le point de palpage défini en dernier lieu qui a été déterminé pendant la phase d'adaptation qui précède directement le phase d'adaptation en court.

4. Procédé selon les revendications 1, 2 ou 3, **caractérisé en ce qu'**il conclut à une augmentation définie précédente du couple si une valeur de seuil prédéterminée de l'augmentation du couple est dépassée, la valeur de seuil prédéterminée étant conservée de manière répétée à au plus un couple croissant de point de palpage jusqu'à ce que l'augmentation du couple délivré par l'entraînement électrique en traction (3) correspond au minium à la hauteur du couple de palpage.

5. Procédé selon la revendication 4, **caractérisé en ce que** le point de palpage de l'embrayage de séparation hybride (4) est adapté par un observateur utilisant une technique de régulation à partir du couple de point de palpage qui correspond à l'augmentation de couple délivré par l'entraînement électrique en traction (3).

6. Procédé selon la revendication 4, **caractérisé en ce que** le point de palpage de l'embrayage de séparation hybride (4) est adapté à partir du couple de point de palpage qui correspond à l'augmentation de couple délivré par l'entraînement électrique en traction (3) à partir d'une ligne caractéristique de l'embrayage de séparation hybride (4).

7. Procédé selon au moins l'une des revendications précédentes, **caractérisé en ce que** lorsque l'adaptation du point de palpage a été réalisée, l'embrayage de séparation hybride (4) est ramené dans la position qu'il prend à l'état non actionné, et on vérifie si le couple délivré par l'entraînement électrique en traction (3) correspond au couple de l'entraînement électrique en traction (3) que ce dernier a délivré dans cette position de l'embrayage de séparation hybride (4) au début de la phase d'adaptation en cours.

8. Procédé selon au moins l'une des revendications précédentes, **caractérisé en ce que** lors de la mise en service du véhicule hybride, le point de palpage utilisé comme point de palpage défini précédemment est un point de palpage calculé.

9. Ensemble de commande d'un embrayage de séparation hybride pour véhicule hybride, apte à être actionné par un actionneur hydrostatique d'embrayage (12), l'embrayage de séparation hybride (4) étant disposé entre un moteur (2) à combustion interne et un entraînement électrique en traction (3), **caractérisé en ce que** l'embrayage de séparation hybride (4) peut être commandé par un procédé selon au moins l'une des revendications 1 à 8 qui précèdent.
